# EUROPEAN PATENT APPLICATION

(11) **EP 2 837 445 A1**
(43) Date of publication of application: **18.02.2015**
(21) Application number: 13275184.3
(22) Date of filing: 14.08.2013
(51) Int. Cl.: B22F 3/105, B22F 5/10, B29C 67/00, F16L 59/065

(54) **Object production**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Disclosed are methods and apparatus for manufacturing an object (54). The method comprises: performing, by Additive Manufacturing apparatus (2), an Additive Manufacturing process to form an initial object (4), the initial object (4) comprising a first portion (42) and a second portion (40), wherein the first portion (42) and the second portion (40) are attached together such that at least part of the first portion (42) is inside at least part of the second portion (40) and such that there is a chamber (50) between the second portion (40) and the at least part of the first portion (42) that is inside the second portion (40), the chamber (50) having a chamber opening (52); establishing, within the chamber (50), via the chamber opening (52), a predetermined environment; and, thereafter, sealing the chamber opening (52) so as to maintain, within the chamber (50), the established environment, thereby producing the object (54).

## Description

### FIELD OF THE INVENTION

The present invention relates to the production of objects. Examples of appropriate objects include, but are not limited to, pipes.

### BACKGROUND

Additive Manufacturing (AM) (also known as Additive Layer Manufacture (ALM), 3D printing, etc.) is a process that may be used to produce functional, complex objects, layer by layer, without moulds or dies. Typically, such processes include providing material (e.g. metal or plastic) in the form of a powder or a wire, and, using a powerful heat source such as a laser beam, electron beam or an electric, or plasma welding arc, melting an amount of that material and depositing the melted material (e.g. on a base plate of a work piece). Subsequent layers are then built up upon each preceding layer.

Example AM processes include, but are not limited to, Laser Blown Powder, Laser Powder Bed, and Wire and Arc technologies.

In a separate field, pipes for carrying fluid are lagged (i.e. thermally insulating material is wrapped around an external surface of the pipes) so as to, for example, prevent the loss of heat from fluid flowing through the pipes. The process of lagging of pipes tends to be time consuming and costly. Also, if a pipe is in a difficult to access location, the lagging of that pipe may be a difficult process. Also, lagging material tends to be bulky and prone to damage as the material tends to be light and delicate.

Some conventional lagging materials are manufactured by sandwiching a glass wool material between thin sheets of aluminium. This tends to be a relatively complex process.

In some situations, pipes are lagged for safety reasons, for example, to prevent fires and prevent people burning themselves. However, in service, a conventional thermal blanket may permit a fuel or oil leak to reach a hot surface which may then ignite.

### SUMMARY OF THE INVENTION

In a first aspect, the present invention provides a method of manufacturing an object. The method comprises: performing, by Additive Manufacturing apparatus, an Additive Manufacturing process to form an initial object, the initial object comprising a first portion and a second portion, wherein the first portion and the second portion are attached together such that at least part of the first portion is inside at least part of the second portion and such that there is a chamber between the second portion and the at least part of the first portion that is inside the second portion, the chamber having a chamber opening; establishing, within the chamber, via the chamber opening, a predetermined environment; and thereafter, sealing the chamber opening so as to maintain, within the chamber, the established environment, thereby producing the object.

The object may be a pipe. The first portion may comprise a tubular portion through which a fluid may flow. The second portion may comprise a tubular portion which surrounds, at least to some extent, the first portion.

In some aspects, the pipe is not a straight pipe. For example, the pipe may have a relatively complicated shape having a plurality of curves and bends.

The initial object may further comprise at least one further tubular portion, each further tubular portion being attached to the second portion such that at least part of that further tubular portion is inside at least part of the second portion and such that the chamber is between the second portion and the at least part of that further tubular portion that is inside the second portion.

The step of establishing the environment may comprise at least partially evacuating the chamber. For example, the chamber may be evacuated of gases and excess material so that there is an at least partial vacuum within the chamber. The step of sealing may be performed such that the chamber is airtight.

The step of evacuating the chamber may be performed such that the chamber is fully evacuated, i.e. so that there is a vacuum within the chamber.

The step of establishing the environment may comprise at least partially filling the chamber with an amount of material, for example, a material having a low thermal conductivity such as a thermosetting foam. The step of sealing may be performed such that movement of the material from the chamber is prevented.

The Additive Manufacturing process may be a powder bed fusion process.

The chamber opening may be a capillary tube having a relatively small cross section.

The initial object may further comprise a support structure within the chamber that connects the first portion to the second portion.

In a further aspect, the present invention provides an object manufactured using a method in accordance with the above aspect. The object may be a pipe.

In a further aspect, the present invention provides apparatus for manufacturing an object. The apparatus comprises: Additive Manufacturing apparatus configured to perform an Additive Manufacturing process to form an initial object, the initial object comprising a first portion and a second portion, wherein the first portion and the second portion are attached together such that at least part of the first portion is inside at least part of the second portion and such that there is a chamber between the second portion and the at least part of the first portion that is inside the second portion, the chamber having a chamber opening; means for establishing, within the chamber, via the chamber opening, a predetermined environment; and means for sealing the chamber opening so as to maintain, within the chamber, the established environment, thereby producing the object.

The object may be a pipe. The first portion may comprise a tubular portion through which a fluid may flow. The second portion may comprise a tubular portion which surrounds, at least to some extent, the first portion.

The means for establishing the environment may comprise means for at least partially evacuating the chamber (such as a vacuum chamber and a vacuum pump). The means for sealing may comprise means for sealing the chamber opening such that the chamber is airtight (such as crimping and braising apparatus, or welding apparatus).

### BRIEF DESCRIPTION OF THE DRAWINGS

Figure 1 is a schematic illustration (not to scale) showing example Additive Manufacturing apparatus;
Figure 2 is a process flow chart showing certain steps of an embodiment of a process of producing a pipe;
Figure 3 is a schematic illustration (not to scale) showing a perspective view of an intermediate pipe;
Figure 4 is a schematic illustration (not to scale) showing a cross section of the intermediate pipe;
Figure 5 is a schematic illustration (not to scale) showing a perspective view of the pipe; and
Figure 6 is a schematic illustration (not to scale) showing a cross section of the pipe.

### DETAILED DESCRIPTION

The terminology "Additive Manufacturing" is used herein to refer to all additive processes that may be used to produce functional, complex objects, layer by layer, without moulds or dies e.g. by providing material (e.g. metal or plastic) typically in the form of a powder or a wire, and, using a powerful heat source such as a laser beam, electron beam or an electric, or plasma welding arc, melting an amount of that material and depositing the melted material (e.g. on a base plate/work piece), and subsequently building layers of material upon each preceding layer.

Additive Manufacture (AM) may also be known *inter alia* as 3D printing, Direct Digital Manufacturing (DDM), Digital Manufacturing (DM), Additive Layer Manufacturing (ALM), Rapid Manufacturing (RM), Laser Engineering Net Shaping (LENS), Direct Metal Deposition, Direct Manufacturing, Electron Beam Melting, Laser Melting, Freeform Fabrication, Laser Cladding, Direct Metal Laser Sintering.

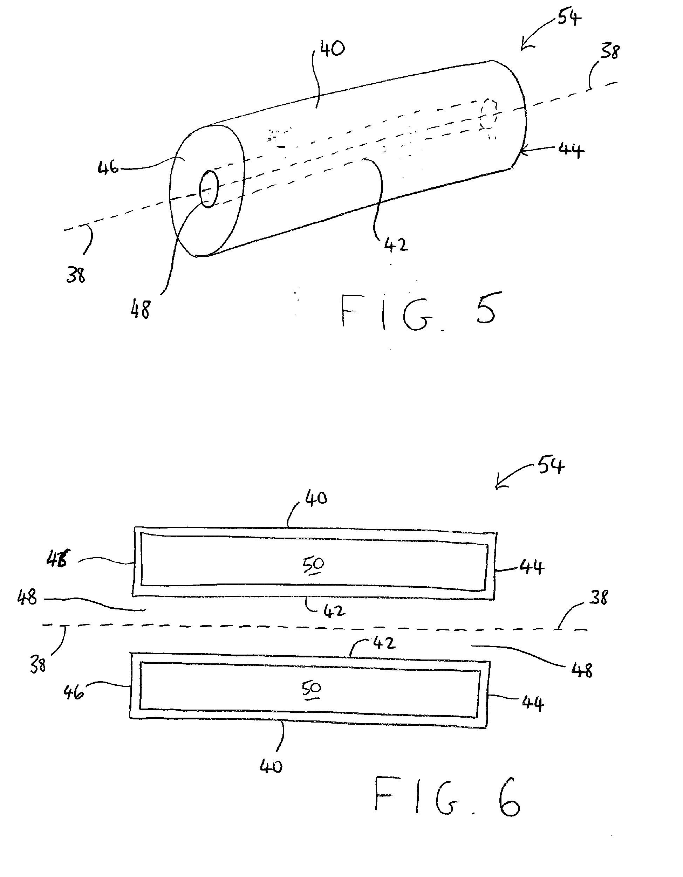

An embodiment of an object is described in more detail later below with reference to Figures 5 and 6. In this embodiment, the object is a pipe.

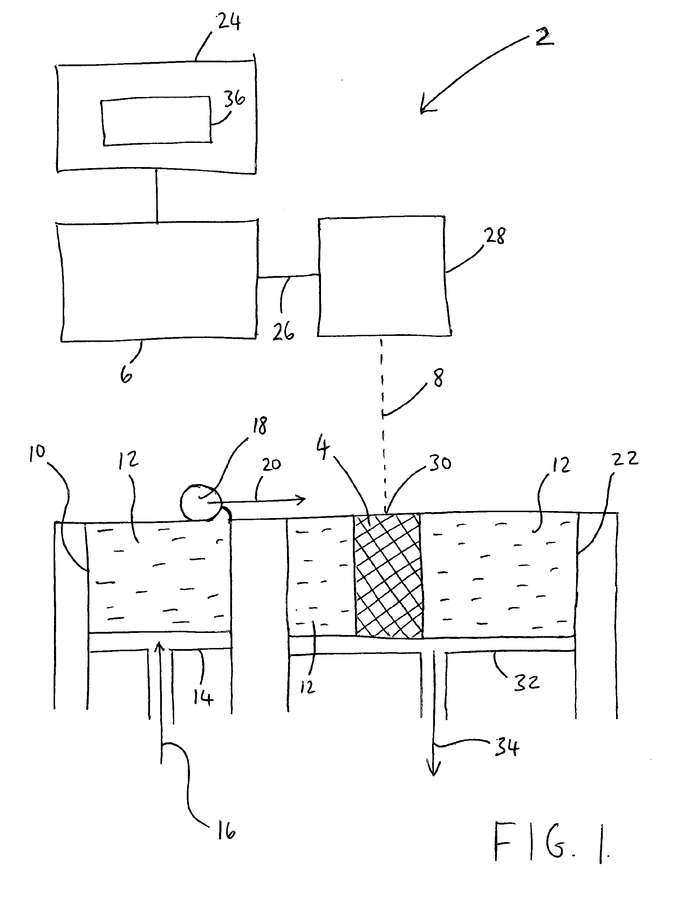

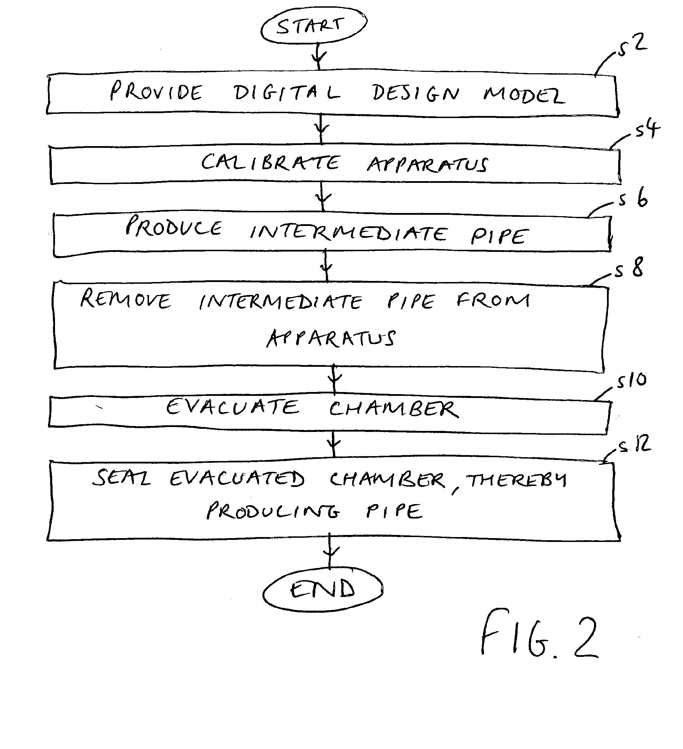

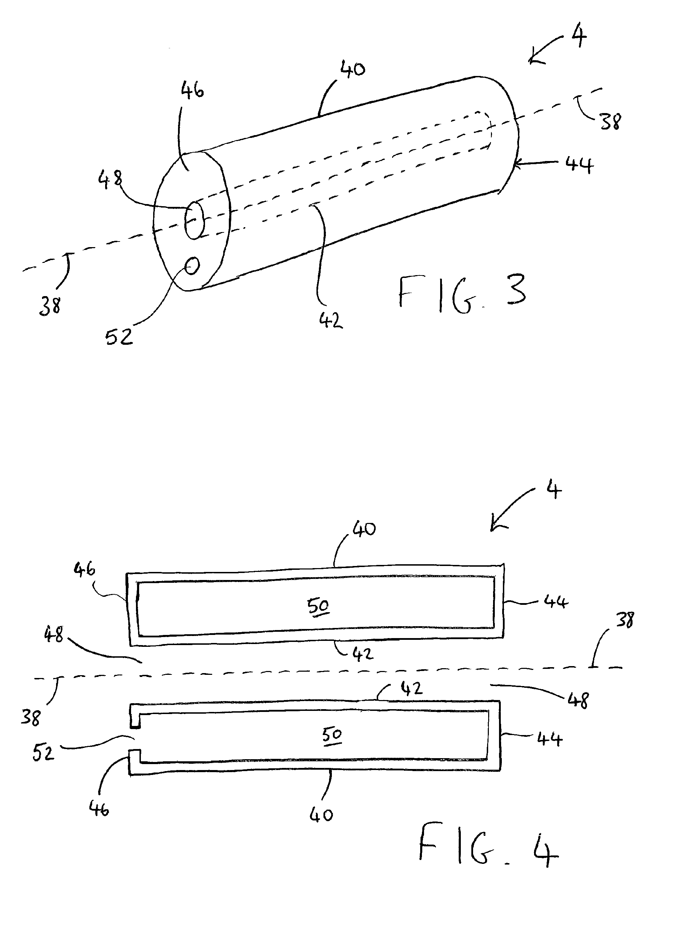

Figure 1 is a schematic illustration (not to scale) showing example Additive Manufacturing apparatus 2 that is used in an embodiment of a process of manufacturing the pipe. In this embodiment, as described in more detail later below with reference to Figure 2, the AM apparatus 2 performs an Additive Manufacturing process so as to create an intermediate pipe 4 that will be further processed to produce the pipe. The intermediate pipe 4 is described in more detail later below with reference to Figures 3 and 4.

In this embodiment, the AM apparatus 2 is apparatus for performing a powder bed AM processes. However, in other embodiments, a different type of AM apparatus is used produce the intermediate pipe 4, e.g. by performing a different type of AM process. Examples of AM processes that may be used in other embodiments include, but are not limited to, Material Extrusion processes, Material Jetting processes, Binder Jetting processes, Sheet lamination processes, Vat Photo-polymerisation processes, Powder bed fusion processes, and Directed Energy Deposition processes.

In this embodiment, the AM apparatus 2 comprises a heat source in the form of a laser source 6 configured to produce a high powered laser beam 8. The laser source 6 may be any appropriate type of laser source, e.g. a laser source that is configured to have a continuous wave power output of 500W.

The AM apparatus 2 further comprises a powder repository 10 (or powder bed) containing an amount of metallic powder 12. The metallic powder 12 is a titanium alloy powder. In other embodiments, a different type of material (e.g. a ceramic powder or a different type of metallic power such as a steel powder, a nickel-based alloy powder, an aluminium alloy powder, or a copper powder) may be used.

In operation, a first piston 14 (that is located at the bottom of the first repository 10) is raised (in the direction indicated by an arrow in Figure 3 and the reference numeral 16) so as to raise an amount of the powder 12 above a top level of the first repository 10. A roller 18 is then rolled (in the direction indicated by an arrow in Figure 3 and the reference numeral 20) over the upper surface of the first repository 10 and across an upper surface of a second repository 22. This is performed so that the metallic powder 12 that was raised above the level of the first repository 10 by the raising of the first piston 14 is spread over an upper surface of the second repository 22. Thus, a top surface of the contents of the second repository 22 is covered by a layer of the metallic powder 12. In other embodiments, a different means of spreading the metallic powder 12 across a top surface of the contents of the second repository 22, such as a wiper, may be used instead of or in addition to the roller 18.

After a layer of the metallic powder 12 has been spread across a top surface of the contents of the second repository 22, the laser source 6 is controlled by a computer 24 to deliver the laser beam 8 via an optical fibre 26 to focussing optics 28. The focussing optics focus the laser beam 8 to a focal point 30 on the layer of metallic power 22 that has been spread across a top surface of the contents of the second repository 22. The laser beam 8 melts a portion of the layer of metallic powder 12 onto which the laser beam 8 is focussed.

In this embodiment, the metallic powder 12 onto which the laser beam 8 is focussed is fully melted by the laser beam 8 and subsequently allowed to cool so as to form a layer of solid material. A second piston 32, located at the bottom of the second repository 22 is then lowered (i.e. moved in a direction indicated in Figure 3 by a solid arrow and the reference numeral 34) to allow for a further layer of metallic powder 12 to be spread by the roller 18 across the top surface of the contents of the second repository 22 (and subsequently melted and allowed to solidify).

Many layers of material are laid on top of one another (in accordance with a digital design model 36 for the intermediate pipe 4 stored by the computer 24) to produce the intermediate pipe 4.

In this embodiment, the laser source 6 and focussing optics 28 are moveable under the control of the computer 24 in an X-Y plane that is parallel to the top surface of the contents of the second repository 22. Thus, the laser focal point 30 may be directed to any point in a working envelope in the X-Y plane so that layers of material of a desired shape may be deposited.

Thus, AM apparatus 2 for performing a process of producing the intermediate pipe 4 is provided.

Figure 2 is a process flow chart showing certain steps of an embodiment of a process of producing the pipe 54 using the above described example AM apparatus 2.

At step s2, the digital design model 36 for the intermediate pipe 4 is specified and stored by the computer 24. In this embodiment, the digital model 28 can be viewed, manipulated and analysed using the computer 24 e.g. by implementing a suitable software package or tool.

At step s4, the AM apparatus 2 is calibrated. This calibration process may, for example, include, using the digital design model 36 for the intermediate pipe 4, determining a "tool path" that will be followed by the AM apparatus 2 so as to produce the intermediate pipe 4.

At step s6, using the AM apparatus 2, an AM process is performed to form the intermediate pipe 4. In this embodiment, the AM apparatus 2 performs a powder bed AM process which is described in more detail above with reference to Figure 3. However, in other embodiments, a different type of AM apparatus and/or process is used produce the intermediate pipe 4.

In this embodiment, the AM process is performed in a substantially inert atmosphere (e.g. a chamber that is back-filled with an inert gas e.g. argon).

Figure 3 is a schematic illustration (not to scale) showing a perspective view of the intermediate pipe 4. In this embodiment, the intermediate pipe 4 is a substantially straight pipe. A longitudinal axis of the intermediate pipe 4 is indicated in Figure 3 by the reference numeral 38.

Figure 4 is a schematic illustration (not to scale) showing a cross section of the intermediate pipe 4 in a plane passing through the longitudinal axis 38.

In this embodiment the intermediate pipe 4 is made of titanium alloy. However, in other embodiments, the intermediate pipe 4 is made of one or more different types of material (e.g. a different type of metal or alloy, or a ceramic) instead of or in addition to titanium alloy.

In this embodiment, the intermediate pipe 4 comprises an outer tube 40, a inner tube 42, a first annular end portion 44, and a second annular end portion 46.

The outer tube 40 is a substantially straight elongate hollow cylinder. A length of the outer tube 40 is 280mm. An outer diameter of the outer tube 40 is approximately 35.6mm. An inner diameter of the outer tube 40 is 35.0mm diameter.

The inner tube 42 is a substantially straight elongate hollow cylinder. A length of the inner tube 42 is substantially the same as the length of the outer tube 40. An outer diameter of the inner tube 42 is approximately 20mm. An inner diameter of the inner tube 42 is 18.8mm.

In this embodiment, the longitudinal axes of the outer tube 40 and the inner tube 42 are the same as the longitudinal axis 38.

In this embodiment, the ends of the inner tube 42 are open. Thus, the inner tube 42 provides a conduit 48 through which a fluid, for example a gas or a liquid, may flow from one end of the inner tube 42 to the other end of the inner tube 42.

In this embodiment, the inner diameter of the outer tube 40 is larger than the external diameter of the inner tube 42. Also, the annular end portions 44, 46 attach the outer tube 40 to the inner tube 42 such that the outer tube 40 and the inner tube 42 are spaced apart from one another and have fixed positions relative to one another. Thus, the outer tube 40, the inner tube 42, and the end portions 8 define a chamber 50.

In this embodiment, the first annular end portion 44 connects together the outer tube 40 and the inner tube 42 at one end of the intermediate pipe 4. The first annular end portion 44 is such that fluid may not flow from the chamber 50 to outside the outer tube 40 through the first annular end portion 44. In other words, the first annular end portion provides an airtight seal for the chamber 50.

In this embodiment, the second annular end portion 46 connects together the outer tube 40 and the inner tube 42 at the opposite end of the intermediate pipe 4 to the end of the intermediate pipe 4 at which the first annular end portion 44 is located. In this embodiment, the second annular end portion 46 comprises a capillary tube 52 that connects the chamber 50 to the atmosphere outside of the outer tube 40 such that fluid (e.g. gases) may flow, via the capillary tube 52, from inside the chamber 50 to outside the outer tube 40 and vice versa. In this embodiment, the capillary tube 52 is a tube that has a small cross section relative to the size of the intermediate pipe 4.

In this embodiment, the capillary tube 52 has a diameter of 2mm.

At step s8, the intermediate pipe 4 is removed from the AM apparatus 2.

At step s10, the chamber 50 is evacuated, or partially evacuated, of air and/or other gases, thereby creating a vacuum, or near-vacuum, within the chamber 50. In this embodiment, gasses are evacuated from the chamber 50 via the capillary tube 30. In this embodiment, gases are evacuated from the chamber 50 by sealing the intermediate pipe 4 in a vacuum chamber and removing the gases from the vacuum chamber using a vacuum pump.

In this embodiment, excess metallic powder 12 within the chamber 50 is removed from the chamber 50 via the capillary tube 52 prior to gas evacuation and sealing.

At step s12, while the chamber 50 is evacuated, or partially evacuated, of gases, the capillary tube 52 is sealed so as to make the chamber 50 airtight, thereby producing the pipe. The sealing of the capillary tube 52 may be performed using any appropriate sealing process such as by using a combination of crimping and braising. Other sealing processes such as a welding process (e.g. electrical resistance welding) may be used,

In this embodiment, the capillary tube 52 is sealed such that fluid flow into the chamber 50 is prevented. Thus, a vacuum or near-vacuum is maintained within the chamber 50.

This completes the process of manufacturing the pipe.

Figures 5 and 6 are schematic illustrations showing the pipe 54. In Figures 5 and 6, features common to the intermediate pipe 4 and the final pipe 54 are indicated with like reference numerals.

Figure 5 is a schematic illustration (not to scale) showing a perspective view of an embodiment of the pipe 54 that is produced by performing the process of Figure 2.

Figure 6 is a schematic illustration (not to scale) showing a cross section of the pipe 54 in a plane passing through the longitudinal axis 38.

In this embodiment the pipe 54 is made of titanium alloy. However, in other embodiments, the pipe 54 is made of one or more different type of material (e.g. a different type of metal, or ceramic) instead of or in addition to titanium alloy.

In this embodiment, the chamber 50 of the pipe 54 is a sealed, i.e. airtight, chamber having as its chamber wall the outer tube 40, the inner tube 42, and the end portions 44, 46. In this embodiment, the chamber 50 of the pipe 54 is an evacuated or partially evacuated chamber, i.e. a chamber that has been evacuated or partially evacuated of material such as air. Thus, in this embodiment there is a vacuum or near-vacuum in the chamber 50 of the pipe 54 between the outer tube 40 and the inner tube 42.

In an example use of the pipe 54, a fluid flows through the tubular conduit 48 provided by the inner tube 42. In this example, the temperature of this fluid is greater than an ambient temperature, i.e. a temperature of the environment in which the pipe 54 is being used. The vacuum or near vacuum within the chamber 50 of the pipe 54 advantageously tends to reduce heat transfer from the inner tube 42 to the outer tube 40. Advantageously, heat transfer from the inner tube 42 to the outer tube 40 via convection and conduction tends to be significantly reduced.

Thus, the fluid flowing through the pipe 54 is thermally insulated. Heat loss from the fluid flowing through the pipe 54 advantageously tends to be lower than if the fluid were flowing through a conventional pipe. The chamber 50 tends to provide that the pipe 54 has a lower thermal conductivity than conventional pipes.

The pipe 54 advantageously comprises integrated thermal insulation for a fluid flowing through that pipe 54. The fluid may be a liquid or a hot gas. Many conventional pipes are thermally insulated by wrapping a lagging material around the pipe. Such lagging materials tend to be expensive, bulky, prone to damage, and require extensive fabrication/tooling to manufacture. In some situations (such as use onboard an aircraft), lagging materials wrapped around a pipe are prone to being damaged. Also, in some situations, lagging materials present a heat source which can result in the ignition of fuel or oil. Also, in some situations, lagging materials may become contaminated with a fluid (such as water, oil or fuel). By using the above described pipe 54, it tends to be possible to avoid using such lagging materials.

Advantageously, by using the above described pipe 54, the use of complex manufacturing processes for producing lagging materials may be avoided.

Also, the above described pipe 54 tends to be safer than using conventional pipes lagged with conventional lagging materials.

A further advantage provided by the above described process is that complex parts, such as heat exchangers, can easily be produced.

The above described pipes tend to reduce the risk of aircraft fires, simplify aircraft design, reduce a number of manufacturing steps, improve aircraft safety, allow pipes carrying hot fluids to be positioned closer to other equipment or structures. Furthermore, an infrared signature of the aircraft may be reduced.

In the above embodiments, the pipe is a substantially straight pipe. However, in other embodiments, the pipe is not a straight pipe. For example, the pipe may include one or more bends or curves. In some embodiments, the shape of the pipe is a spiral. In some embodiments, the pipe comprises a plurality of branches such that fluid flow may be split amongst a plurality of different conduits. In some embodiments, the pipe may include one or more valves for controlling fluid flow through the pipe. AM process, such as those described above, tend to be particularly well suited to manufacturing complex structures such as embodiments of the pipe that have relatively complex shapes and/or include one or more valves. Powder bed fusion AM processes (such as the one described in more detail above with reference to Figures 1 and 2) tend to be particularly well suited to manufacturing complex structures such as embodiments of the pipe that have relatively complex shapes and/or include one or more valves.

In some embodiments, one or more pipes are joined together to form a pipe system.

In the above embodiments, the pipe comprises a single inner tube. However, inn other embodiments, the pipe comprises a plurality of inner tubes. Each of the inner tubes may provide a conduit through which a fluid may flow, as described above. The inner tubes may be separated from one another by the evacuated chamber. Each of the inner tubes may be separated from the outer tube by the evacuated chamber. AM process, such as those described above, tend to be particularly well suited to manufacturing complex structures such as embodiments of the pipe that include a plurality of separate inner tubes. Powder bed fusion AM processes tend to be particularly well suited to manufacturing complex structures such as embodiments of the pipe that include a plurality of separate inner tubes.

In the above embodiments, the outer tube is connected to the inner tube via the end portions. However, in other embodiments, the pipe includes a different structure to connect the outer tube to the inner tube instead of or in addition to the end portions. For example, in some embodiments, support pillars within the chamber attach the outer tube to the inner tube. Also for example, in some embodiments, a lattice or honeycomb shaped support structure attaches the outer tube to the inner tube. Such support structures advantageously tend to increase the strength of the pipe. Such support structures tend to reduce the likelihood of the pipe being damaged. However, in some embodiments, the inclusion of such a support structure may increase the thermal conductivity of the pipe wall.

In the above embodiments, the chamber extends along substantially the entire length of the pipe. However, in other embodiments, the chamber does not extend along the entire length of the pipe.

In the above embodiments, the chamber is evacuated of gases (e.g. air) so as to provide a vacuum or near-vacuum within the sealed chamber. However, in other embodiments, instead of being evacuated, the chamber is filled with a thermally insulating material such as a thermosetting foam or a fluid (such as a gas) with a relatively low thermal conductivity (e.g. relative to the environment in which the pipe is being used and/or relative to the material from which the pipe is made). In such embodiments, the outer tube may be made of a plastic. In some embodiments, the chamber is filled with a "phase change material". Such a phase change material held within the chamber may change state (e.g. from a solid to a liquid) by absorbing energy from the fluid flowing through the inner pipe, and thereby prevent heat escaping from the pipe. Such phase change material may act as a thermal regulator or time bound safety device.

In the above embodiments, the pipe is for transporting fluids, for example, hot liquids or gases. However, in other embodiments, the pipe may be a conduit through which, for example, an instrument wire, a pressure sensor/temperature probe, an optical device, etc. may be passed. The insulation of the device passing through the pipe may be used to control the efficiency of that device.

In the above embodiments, the produced object is a pipe. However, in other embodiments, the object is a different type of object (i.e. an object other than a pipe). For example, the object may be a container for containing fluids.

In some embodiments, a wall of the chamber such as the external surface of the inner tube and/or the internal surface of the outer tube are silvered or mirrored to reflect heat that is radiated across the chamber from the inner tube. Such a silvered surface may be deposited during the AM process. Alternatively, after the intermediate pipe have been produced, and prior to the evacuation of the chamber, a reflective coating may be applied to the inner walls of the chamber, or the internals walls of the chamber may be processed (e.g. chemically machined or acid etched) so as to make the internal surface of the chamber more reflective.

## Claims

1. A method of manufacturing an object (54), the method comprising:
performing, by Additive Manufacturing apparatus (2), an Additive Manufacturing process to form an initial object (4), the initial object (4) comprising:
a first portion (42); and
a second portion (40); wherein
the first portion (42) and the second portion (40) are attached together such that at least part of the first portion (42) is inside at least part of the second portion (40) and such that there is a chamber (50) between the second portion (40) and the at least part of the first portion (42) that is inside the second portion (40), the chamber (50) having a chamber opening (52);
establishing, within the chamber (50), via the chamber opening (52), a predetermined environment; and
thereafter, sealing the chamber opening (52) so as to maintain, within the chamber (50), the established environment, thereby producing the object (54).

2. A method according to claim 1, wherein:
the object (54) is a pipe; and
the first portion (42) comprises a tubular portion through which a fluid may flow.

3. A method according to claim 2, wherein the pipe is not a straight pipe.

4. A method according to claim 2 or 3, wherein the initial object (4) further comprises at least one further tubular portion, each further tubular portion being attached to the second portion (40) such that at least part of that further tubular portion is inside at least part of the second portion (40) and such that the chamber (50) is between the second portion (40) and the at least part of that further tubular portion that is inside the second portion (40).

5. A method according to any of claims 1 to 4, wherein:
the step of establishing comprises at least partially evacuating the chamber (50); and
the step of sealing is performed such that the chamber (50) is airtight.

6. A method according to claim 5, wherein the step of evacuating the chamber (50) is performed such that the chamber (50) is fully evacuated.

7. A method according to any of claims 1 to 4, wherein:
the step of establishing comprises at least partially filling the chamber (50) with an amount of material; and
the step of sealing is performed such that movement of the material from the chamber (50) is prevented.

8. A method according to claim 7, wherein the material has a low thermal conductivity.

9. A method according to any of claims 1 to 8, wherein the Additive Manufacturing process is a powder bed fusion process.

10. A method according to any of claims 1 to 9, wherein the chamber opening (52) is a capillary tube having a relatively small cross section.

11. A method according to any of claims 1 to 10, wherein the initial object (4) further comprises a support structure within the chamber (50) that connects the first portion (42) to the second portion (50).

12. An object (54) manufactured using a method according to any of claims 1 to 11.

13. Apparatus for manufacturing an object (54), the apparatus comprising:
Additive Manufacturing apparatus (2) configured to perform an Additive Manufacturing process to form an initial object (4), the initial object (4) comprising:
a first portion (42); and
a second portion (40); wherein
the first portion (42) and the second portion (40) are attached together such that at least part of the first portion (42) is inside at least part of the second portion (40) and such that there is a chamber (50) between the second portion (40) and the at least part of the first portion (42) that is inside the second portion (40), the chamber (50) having a chamber opening (52);
means for establishing, within the chamber (50), via the chamber opening (52), a predetermined environment; and
means for sealing the chamber opening (52) so as to maintain, within the chamber (50), the established environment, thereby producing the object (54).

14. Apparatus according to claim 13, wherein:
the object (54) is a pipe; and
the first portion (42) comprises a tubular portion through which a fluid may flow.

15. Apparatus according to claim 13 or 14, wherein:
the means for establishing comprises means for at least partially evacuating the chamber (50); and
the means for sealing comprises means for sealing the chamber opening (52) such that the chamber (50) is airtight.
